(19) Europäisches Patentamt
European Patent Office
Office européen des brevets

(11) Veröffentlichungsnummer: **0 004 597**
**B1**

(12) # EUROPÄISCHE PATENTSCHRIFT

(45) Veröffentlichungstag der Patentschrift: **30.06.82**

(51) Int. Cl.³: **C 09 D 3/72,** C 08 G 18/10

(21) Anmeldenummer: **79100850.1**

(22) Anmeldetag: **21.03.79**

(54) **Beschichtungsmassen und Verfahren zur Beschichtung von textilen Materialien und Leder.**

(30) Priorität: **01.04.78 DE 2814079**

(43) Veröffentlichungstag der Anmeldung:
**17.10.79 Patentblatt 79/21**

(45) Bekanntmachung des Hinweises auf die Patenterteilung:
**30.06.82 Patentblatt 82/26**

(84) Benannte Vertragsstaaten:
**BE CH DE FR GB IT NL SE**

(56) Entgegenhaltungen:
DE - A - 2 320 928
FR - A - 2 094 058
GB - A - 1 085 455

(73) Patentinhaber: **BAYER AG**
**Zentralbereich Patente, Marken und Lizenzen**
**D-5090 Leverkusen 1, Bayerwerk (DE)**

(72) Erfinder: **Berndt, Gerhard**
**Rehwechsel 22**
**D-4019 Monheim (DE)**
Erfinder: **König, Eberhard, Dr.**
**Gelberweg 22**
**D-6242 Kronberg 2 (DE)**
Erfinder: **Pedain, Josef, Dr.**
**Haferkamp 6**
**D-5000 Koeln 80 (DE)**
Erfinder: **Thoma, Wilhelm, Dr.**
**Birkenweg 25**
**D-5090 Leverkusen 31 (DE)**
Erfinder: **Schröer, Walter, Dr.**
**Nicolai-Hartmann-Strasse 29**
**D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 004 597 B1

# Beschichtungsmassen und Verfahren zur Beschichtung von textilen Materialien und Leder

Die vorliegende Erfindung betrifft durch Erhitzen zu Polyurethankunststoffen vernetzbare Massen für die Beschichtung vorzugsweise textiler Flächengebilde, insbesondere nach dem Umkehrverfahren, bevorzugt für Haftstriche im Umkehrverfahren. Die Beschichtungsmassen enthalten aus ökologischen und ökonomischen Gründen kein oder maximal 10 Gew.-% organisches Lösungsmittel und bestehen im wesentlichen aus linearen und/oder verzweigten Urethan-Präpolymeren mit blockierten NCO-Endgruppen, wäßrigen Dispersionen von Polymeren, z.B. Urethan-Polymeren, Vinylpolymeren und/oder Dienpolymeren, und/oder wäßrigen Polymerlösungen sowie aliphatischen und/oder cycloaliphatischen und/oder aromatischen Aminen mit mindestens zwei primären und/oder sekundären Aminogruppen als latenten Vernetzern. Die kettenverlängernde bzw. zur Vernetzung führende Reaktion erfolgt nach dem Auftragen der Beschichtung auf ein Substrat in einem Beschichtungskanal bei erhöhter Temperatur.

Es gehört seit längerer Zeit zum Stand der Technik, Textilien, wie Gewebe, Gewirke oder Vliese, zum Zwekke der Herstellung von Kunstleder und ähnlichen Produkten mit Lösungen von Polyurethanen nach dem Direkt-oder Umkehrverfahren zu beschichten. Die Beschichtungslösungen können entweder Urethanvorpolymere enthalten, die zur Erreichung ihrer endgültigen Kunststoffeingenschaften und Produktechtheiten mit polyfunktionellen Vernetzern umgesetzt werden (sogenannte Zweikomponenten-Polyurethane) oder hochpolymere Polyurethane, die ihre Kunststoffeigenschaften schon voll besitzen (sogenannte Einkomponenten-Polyurethane).

Die so erhaltenen Beschichtungen werden zur Fabrikation von Oberbekleidung, Täschnerwaren, Schuhobermaterial, Zeltplanen, Markisen, Polsterwaren und vielen Artikeln verwendet.

Aus der DE—A 2 431 846 ist es bekannt, Polyurethane aus ihrer Lösung in einem Gemisch aus Wasser und einem einzigen organischen Lösemittel, z.B. Dimethylformamid, zu verarbeiten, um die aus ökologischen und ökonomischen Gründen erforderliche Rückgewinnung und Kreislaufführung des Lösemittels zu ermöglichen. Ferner zählt zum Stand der Technik (DE—A 1 770 068 und DE—A 2 314 512) die Herstellung von Beschichtungen mittels ionischer oder nichtionischer Polyurethandispersionen, die zur Erlangung der nötigen Streichviskosität mit wasserlöslichen bzw. -quellbaren Polymeren verdickt werden.

Gegenstand der GB—A 1085 455 ist ein Verfahren zur Verminderung der Wasser- und Luftdurchlässigkeit von nach dem Koagulationsverfahren hergestellten mikroporösen (poromeren) Lederaustauschstoffen. Das poröse Flächengebilde wird durch Imprägnierung einer Fasermatte und anschließende Koagulation eines mit Hydrazin kettenverlängerten, fertigen Polyurethans in Form einer ca. 20%igen Dimethylformamidlösung ("Imprägniermittel"), die einen weiteren Polymerzusatz (z.B. ein Vinylchlorid/Vinylacetatharz), sowie einen Wasserzusatz zur Verbesserung der mikroporösen Koagulierbarkeit enthalten kann, hergestellt.

Dieses poröse Flächengebilde wird mit einem große Mengen an Lösungsmitteln enthaltenden Lack imprägniert, welcher aus einem Ketoxim-blockierten NCO-Präpolymeren und einem aminofunktionellen Härter besteht, wobei das Gemisch unter Entfernung des Lösungsmittels ausgehärtet wird und wobei diese gehärtete Lackschicht die Funktion eines Finish's hat.

DE—A 2 320 928 betrifft Überzugsmassen für Magnetbänder, welche Polyurethan-Bindemittel enthalten. Als Bindemittel dient dabei ein Gemisch aus einem blockierten NCO-Präpolymeren und einem aktive Wasserstoffatome enthaltenden Härter, welches zwingend (s. Patentanspruch 1) ein organisches Lösungsmittel enthält.

Die FR—A 2 094 058 betrifft die Herstellung wäßriger PU-Dispersionen, wobei in einem Verfahrensschritt blockierte NCO-Gruppen enthaltende Präpolymere mit Polyaminen umgesetzt werden, doch ist kein Hinweis auf die Verwendung wäßriger Lösungen oder Dispersionen von Polymerisaten enthalten.

In der DE—A 2 448 133 wird die Beschichtung von Textilien mit reaktiven Polyurethansystemen beschrieben, welche keine flüchtigen Lösungsmittel wie Dimethylformamid, Methyläthylketon, Toluol u.a., sondern z.B. PVC-Weichmacher vom Typ der Phthalsäureester enthalten. Der Vorteil solcher Reaktivsysteme ist das Fehlen herkömmlicher Lösungsmittel. Nachteilig ist jedoch ihr Gehalt an PVC-Weichmachern, die aus den Beschichtungen ausblühen bzw. ausschwitzen und die Beschichtungsartikel unbeständig gegen Chemischreinigung machen. In einem speziellen Verfahren dieser Art werden gemäß US—Patent 3 755 261 komplexe Salze des 4,4'-Diaminodiphenylmethans als latenter Vernetzer in PVC-Weichmachern dispergiert. Nachteilig sind hierbei vor allem die toxischen Eigenschaften des 4,4'-Diaminodiphenylmethans. Ein weiterer gravierender Nachteil der bisher bekannten lösungsmittelfreien PUR-Reaktivsysteme ist das starke Penetrieren der Beschichtungsmassen in das zukaschierte Textil, wodurch grifflich harte, von der Narbung her unattraktive Beschichtungsartikel erhalten werden.

Dieser Nachteil wird nach dem Stand der Technik (US—Patent 3 228 820) sum Teil durch den Zusatz von Thixotropierungsmitteln auf Basis feindisperser Kieselsäure kompensiert. Neben aufwendiger Dispergierarbeit ist hierfür jedoch im allgemeinen auch noch der Zusatz organischer Lösungsmittel zur Einstellung der erfolderlichen Arbeitsviskosität notwendig.

Überraschenderweise wurde nunmehr gefunden, daß die beschriebenen Nachteile der bisher bekannten Beschichtungsverfahren vermieden werden, wenn man die nachstehend beschriebenen

Beschichtungsmassen einsetzt, die im wesentlichen lösungsmittelfrei sind und aus einem Gemisch eines verkappten NCO-Präpolymeren, einer wäßrigen Polymerdispersion und eines Polyamins bestehen.

Gegenstand der Erfindung sind somit hitzehärtbare Zweikomponenten-Beschichtungsmassen für textile Materialien und Leder auf Basis von

a) gegebenfalls verzweigten Vorpolymeren mit 2 bis 8, vorzugsweise 2 bis 4, besonders bevorzugt 2 oder 3, endständigen, blockierten Isocyanatgruppen und einem mittleren Molekulargewicht zwischen 500 und 25 000, vorzugsweise zwischen 2000 und 10 000, hergestellt aus einer höhermolekularen Polyhydroxylverbindung und einem Überschuß eines Polyisocyanats unter anschließender Blockierung der freien NCO-Gruppen, wobei die Vorpolymeren 1 bis 8 Gew.-% an NCO-Gruppen in blockierter Form enthalten,

b) aliphatischen und/oder cycloaliphatischen und/oder aromatischen Aminen mit mindestens 2 primären und/oder sekundären Aminogruppen, im Äquivalentverhältnis zwischen Aminogruppen und blockierten NCO-Gruppen von 0,7 bis 1 bis 1,1 bis 1, sowie gegebenenfalls an sich bekannten Zuschlagstoffen, dadurch gekennzeichnet, daß sie

c) 3 bis 50 Gew.-%, vorzugsweise 10 bis 30 Gew.-%, einer stabilen wäßrigen Polymerdispersion und/oder wäßrigen Polymerlösung mit einem Feststoffgehalt von 20 bis 70 Gew.-%, vorzugsweise 30 bis 50 Gew.-%, besonders bevorzugt ca. 40 Gew.-%, sowie

d) maximal 10 Gew.-%, vorzugsweise bis 6 Gew.-%, eines organischen Lösungsmittels enthalten.

Besonders bevorzugt sind die erfindungsgemäßen Beschichtungsmassen lösungsmittelfrei. Die Konzentationen der Polymerdispersion bzw. Polymerlösung werden in der Regel so gewählt, daß die Beschichtungsmasse 1—25 Gew.-%, vorzugsweise 5—15 Gew.-% des Polymeren und 2—30 Gew.-%, vorzugsweise 10—25 Gew.-%, Wasser enthält.

Gegenstand der Erfindung ist auch ein Verfahren zur Beschichtung von Substraten, indem man auf das Substrat eine Beschichtungsmasse auf Basis eines Polyurethan-Reaktivsystems nach dem Direkt- oder Umkehrverfahren aufbringt und unter Formgebung verfestigt, welches dadurch gekennzeichnet ist, daß als Beschichtungsmasse die erfindungsgemäßen Kompositionen eingesetzt und durch Erhitzen des beschichteten Substrats auf ca. 120—190°C, vorzugsweise 140—170°C, ausgehärtet werden.

Es ist als überraschend anzusehen, daß die mit reinem Wasser im allgemeinen unverträglichen blockierten NCO-Präpolymeren bis zu einem Gewichtsverhältnis von ca. 1:1 mit wäßrigen Polymerdispersionen und/oder wäßrigen Polymerlösungen unter Ausbildung stabiler Emulsionen mischbar sind, deren Streichbarkeit und deren gleichmäßiger Verlauf über längere Zeiträume hinweg unverändert bleiben. Darüber hinaus ist auch das Filmbildungsvermögen der so erhaltenen Pasten deutlich verbessert.

Besonders überraschend ist, daß mit den erfindungsgemäßen Beschichtungspasten ein Penetrieren in textile Substrate vermieden wird. Dieses Penetrieren der Beschichtungsmassen in das Textil führt, wie schon erwähnt, bei den Verfahren des Standes der Technik zu einem harten Griff sowie einer geringen Narbung und Haftfestigkeit der beschichteten Artikel. Durch das erfindungsgemäß Einführen der wäßrigen Dispersion und/oder Lösung der Polymeren in die Zweikomponenten-beschichtungsmasse wird zunächst nur eine relativ geringe Viskositätsänderung erzielt, doch wird dieser Zusatz überraschend während des Ausheizens der Zweikomponentenmischung einem sonst zwischenzeitlich starken Viskositätsabbau entgegen und das Polymere stabilisiert das Fließverhalten der Mischung derart, daß die bislang beobachtete, unerwünscht starke Penetration der Zweikomponentensysteme in die vorgelegten Substrate gebremst und sinnvoll reguliert wird. Die erfindungsgemäßen Beschichtungen weisen auch eine gute Knickechtheit auf, während Beschichtungen ohne Dispersionszusatz deutlich schwächere Knickechtheiten, recht geringe Haftungen und unzureichende Chemisch-Reinigungsbeständigkeiten zeigen (vgl. Beispiele 1 bis 3).

Die Urethanpräpolymeren mit blockierten NCO-Endgruppen (Komponente a) der erfindungsgemäßen Beschichtungsmassen) werden aus gegebenenfalls verzweigten, 2 bis 8, vorzugsweise 2 bis 4, besonders bevorzugt 2 oder 3, Hydroxylgruppen aufweisenden Verbindungen mit einem Molekulargewicht zwischen 400 und 10 000, vorzugsweise 1000 bis 4000 (insbesondere Polyesterpolyolen und besonders bevorzugt Polyetherpolyolen), sowie einem Überschuß an aromatischen und/oder cycloaliphatischen und/oder aliphatischen Polyisocyanaten und Blockierungsmitteln hergestellt.

Vorzugsweise hält man dabei ein OH/NCO-Äquivalentverhältnis von 1:1,3 bis 1:2,5, besonders bevorzugt 1:1,8 bis 1:2,1 ein, so daß die Urethanpräpolymeren 1 bis 8 Gew.-%, bevorzugt 2 bis 4 Gew.-% an NCO-Gruppen in blockierter Form enthalten.

Die zur Herstellung der Urethanpräpolymeren verwendeten Polyester und/oder Polyether sind aus den an sich bekannten Bausteinen, wie z.B. Di- oder Trialkoholen, Di- und Tricarbonsäuren, Hydroxycarbonsäuren, Lactonen, Äthylenoxid, Propylenoxid-1,2, Butylenoxid-1,2 oder Tetrahydrofuran bzw. Gemischen daraus aufgebaut.

Bevorzugt sind Polyäther und Polyester, deren Schmelzpunkt unter 40°C, besonders bevorzugt unter 20°C liegt.

Für den Aufbau der erfindungsgemäßen Beschichtungsmassen geeignete Polyhydroxylverbindungen werden im Detail in der DE—A 2 431 846, der DE—A 2 402 840 (US-Patent 3 984 607) sowie der DE—B 2 457 387 (US-Patent 4 035 213) beschrieben. Auch die zur Herstellung der Urethanpräpolymeren geeigneten Polyisocyanate werden in diesen Druckschriften eingehend beschrieben.

Als Blockierungsmittel für die NCO-Präpolymeren kommen alle aus der Polyurethanchemie an sich bekannten Verbindungen für die Maskierung von NCO-Gruppen in Frage, welche beim Erhitzen auf über ca. 120°C unter Freisetzung der Isocyanatgruppen wieder abgespalten werden, beispielsweise Ketoxime aus Hydroxylamin und Ketonen wie Aceton, Methyläthylketon, Diäthylketon, Methylpropylketon, Methylisopropylketon, Methylisobutylketon, Cyclohexanon, Acetophenon und Benzophenon.

Weiterhin eignen sich als Blockierungsmittel Alkylester der Acetessigsäure und der Malonsäure, z.B. Acetessigsäureäthylester und Malonsäurediäthylester, Lactame wie Caprolactam, sowie Phenole wie Nonylphenol.

Bevorzugte Verwendung finden erfindungsgemäß Präpolymere aus Polypropylenglykoläthern bzw. propoxyliertem Bisphenol A und Toluylendiisocyanat und/oder Diphenylmethandiisocyanat, die mit Methyläthylketoxim (Butanon-oxim) blockiert sind.

Die erfindungsgemäßen Beschichtungspasten enthalten 3—50 Gew.-% an wäßrigen Polymerdispersionen und/oder wäßrigen Polymerlösungen. Geeignete Polymerdispersionen sind beispielsweise Polyurethandispersionen, wäßrige Latices von Homo- und Copolymeren von Vinylmonomeren und gegebenenfalls Dienen sowie auch wäßrige Dispersionen von Nitrozelluloselösungen, wie sie aus der Lederzurichtung an sich bekannt sind.

Die Polyurethandispersionen können anionische, kationische oder nichtionogene Dispersionzentren enthalten, gegebenenfalls auch externe Emulgatoren. Geeignete PUR-Dispersionen werden beispielsweise von D. Dieterich et. al. in J. Oil Col. Chem. Assoc. 1970, *53*, 363—379, in Die Angewandte Makromolekulare Chemie, 1972, *26*, 85—106, in Angewandte Chemie 1970, *82*, 53—63, sowie in den DE-Offenlegungsschriften 2 550 860, 1 495 745 (US-Patent 3 479 310), 1 495 770 (US-Patent 3 535 274), 1 495 847 (Can. Patent 764 009), 1 770 068 (US-Patent 3 756 992) sowie 2 314 512 beschrieben.

Bevorzugte PUR-Dispersionen sind solche aus Polyhydroxypolyestern, Hexan-und/oder Isophorondiisocyanat und Äthylendiaminäthansulfonat der Formel

$$H_2N—CH_2—CH_2—NH—CH_2—CH_2—SO_3^{\ominus}Na^{\oplus}$$

Die erfindungsgemäß in Frage kommenden Polymerisatlatices können z.B. aus folgenden Monomeren aufgebaut sein: Acryl- und Methacrylsäureester des Methanols, Ethanols oder Butanols, Vinylchlorid, Vinylidenchlorid, Vinylacetat, Vinylalkohol (durch partielle Verseifung von Polyvinylacetat), Ethylen, Propylen, Acrylnitril, Styrol, Butadien, Isopren, Chloropren; ferner Acrylamid, N-Methylolacrylamid, Methacrylamid, Acrylsäure und Methacrylsäure. Polymerisatlatices dieser Art werden z.B. im US-Patent 3 869 413 sowie in den DE-Offenlegungsschiften 2 550 832, 2 627 073 und 2 627 074 beschrieben.

Erfindungsgemäß bevorzugte Polymerdispersionen sind solche aus Acrylsäurebutylester, Styrol, Acrylnitril, Acrylamid, Acrylsäure und N-Methylolacrylamid sowie gegebenenfalls Butadien.

Außer den beispielhaft genannten Polymerdispersionen können die Präpolymeren mit geblockten NCO-Endgruppen auch mit wasserlöslichen oder wasserquellbaren Polymeren verschnitten werden, z.B. mit wäßrigen Lösungen von Casein, mit Caprolactam-modifizeritem Casein, Gelatine, Celluloseethern, Alginaten, Polyacrylamid, Polyvinylalkohol, Polyvinylpyrrolidon oder Polyacrylsaure.

Als gegenüber den blockierten Isocyanaten in den erfindungsgemäßen Beschichtungsmassen inerte organische Lösungsmittel seien beispielsweise genannt: Isopropanol, Ethylenglykolmonomethylether, Ethylenglykolmonoethylether und deren Essigsäureester; Methylethylketon, Cyclohexanon, Butylacetat und DMF.

Zur Vernetzung enthalten die erfindungsgemäßen Beschichtungen 2 bis 20 Gew.-%, bevorzugt 4 bis 10 Gew.-%, im Gesamtgemisch an aliphatischen und/oder cycloaliphatischen und/oder aromatischen Aminen mit mindestens 2 primären und/oder sekundären Aminogruppen. Solche Amine sind z.B. Ethylendiamin, Diethylentriamin, Propylendiamin-1,2, Propylendiamin-1,3, Hexandiamin-1,6, N-Methyl-bis-(3-aminopropyl)-amin, Cyclohexandiamin-1,3 und -1,4, Isophorondiamin, 4,4'-Diaminodicyclohexylmethan, die isomeren 4,4'-Diaminodimethyldicyclohexylmethane, 4,4'-Diaminodiphenylmethan, Diethyl-toluylendiamin, bevorzugt jedoch bei Raumtemperatur flüssige Amine der nachstehenden Formeln II und III und die tricyclischen Diamine gemäß DE—A 2 638 731 (insbesondere das Amin der Formel I):

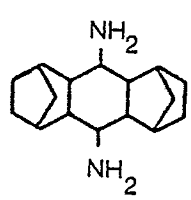

I

II 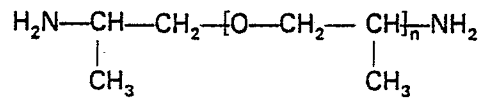 n=2—10

III 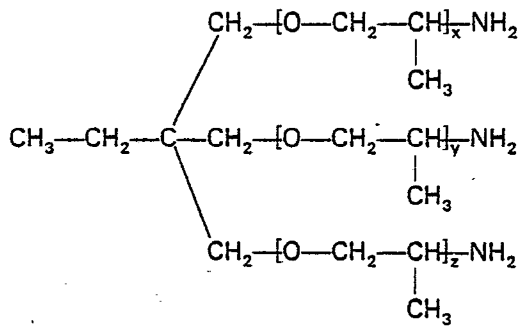 3≤x+y+z≤9

Das Äquivalentverhältnis zwischen $NH_2$- und blockierten NCO-Gruppen in den Beschichtungsmassen liegt im allgemeinen zwischen 1,1:1,0 und 0,7:1,0, vorzugsweise zwischen 1,0:1,0 und 0,8:1,0, besonders bevorzugt bei ca. 0,9:1,0.

Wie schon erwähnt, sind die erfindungsgemäßen Beschichtungsmassen insbesondere zur Beschichtung von textilen Flächengebilden, Leder oder Spaltleder geeignet. Die Auftragsmenge kann dabei in weiten Grenzen schwanken; sie liegt im allgemeinen zwischen 30 und 300 $g/m^2$, vorzugsweise zwischen 40 und 100 $g/m^2$. Die Beschichtungsmassen können sowohl nach dem Direkt- als auch bevorzugt nach dem Umkehrbeschichtungsverfahren appliziert werden. Selbstverständlich ist es dabei gegebenenfalls möglich, neben den erfindungsgemäßen Beschichtungsmassen auf das Substrat auch konventionelle Beschichtungslösungen oder -pasten als weitere Schichten aufzubringen. Solche konventionellen Rezepturen werden z.B. in der DE-Offenlegungsschrift 2 457 387 (US-Patent 4 035 213) eingehend als Deck- bzw. Haftstriche beschrieben.

Bevorzugt werden die erfindungsgemäßen Beschichtungspasten als Haftstriche bei der Umkehrbeschichtung von Textilien, Leder oder Spaltleder eingesetzt. Man trägt dabei zunächst auf einen geeignete Zwischenträger (z.B. ein Stahlband, ein Trennpapier, eine Silikonmatrize und dergl.) den Deckstrich (vorzugsweise eine erfindungsgemäße Paste oder auch eine konventionelle Rezeptur) in einer Dicke von ca. 20 bis 80 $g/m^2$ auf, trocknet in einem Trockenkanal, bringt auf den getrockneten Deckstrich den Haftstrich in einer Dicke von ca. 30 bis 100 $g/m^2$ auf, kaschiert das Substrat zu, heizt die Beschichtung in einem wieteren Trockenkanal bei ca. 120—190°C, vorzugsweise 140—170°C, aus und zieht das beschichtete Substrat vom Trennträger ab.

Wie schon erwähnt, können aber die erfindungsgemäßen Beschichtungspasten auch im Direktstreichverfahren unmittelbar auf das textile Substrat aufgebracht werden.

Zum Aufbringen der Pasten im Transfer- oder im Direktstreichverfahren bedient man sich der bekannten Techniken des Walzenrakels, Gummituchrakels, Reverse Roll Coaters, u.a. Darüber hinaus lassen sich mit besonderem Vorteil für hochkonzentrierte Streichpasten die modernen Techniken des Siebdruckes und des Gravurwalzendrucks einsetzen.

Die erfindungsgemäßen Streichpasten aus Urethanpräpolymeren mit blockierten NCO-Endgrupen, wäßrigen Polymer-dispersionen und Polyaminen als Vernetzer können verschiedene an sich bekannte Zuschläge enthalten, z.B. Pulverpigmente, formierte Pigmente oder andere farbgebende Mittel, UV-Stabilisatoren, Antioxidantien, griffbeeinflussende Mittel wie Silicone, Celluloseester, Füllstoffe wie Kreide oder Schwerspat, oberflächenaktive Kieselgele etc.

In den nachstehenden Beispielen sind Mengenangaben, wenn nicht anders vermerkt, als Gewichtsteile bzw. Gewichtsprozente zu verstehen.

Zur Herstellung der in den Beispielen verwendeten blockierten NCO-Präpolymeren A—I werden folgende Ausgangskomponenten eingesetzt:

Polyol 1: Auf 1,2-Propylenglykol gestarteter Polypropylenglykoläther (OH-Zahl 56; mittleres Molgewicht 2000).

Polyol 2: Auf Bisphenol A gestarteter Polypropylenglykoläther (OH-Zahl 200).

Polyol 3: Auf Trimethylolpropan gestarteter Polyäther aus Propylenoxid und ca. 20% Äthylenoxid mit der OH-Zahl 28 (mittleres Molgewicht 6000).

Polyol 4: Polyester aus Adipinsäure und Diäthylenglykol (mittleres Molgewicht 2500).

Polyol 5: Auf 1,2-Propylenglykol gestarteter Polypropylenglykoläther (OH-Zahl 112).

MDI: 4,4'-Diphenylmethandiisocyanat.

TDI/80: Toluylendiisocyanat (Gemisch von 2,4- und 2,6-Isomerem im Verhältnis 2:8).

IPDI: 3,3,5-Trimethyl-5-isocyanatomethyl-cyclohexylisocyanat.

HDI: 1,6-Hexandiisocyanat.

Herstellung von blockierten NCO-Präpolymeren

A) Zu 774 g geschmolzenem MDI gibt man unter Rühren 2000 g Polyol 1, 275 g Polyol 2 sowie 22,5 g Butandiol-(1,4). Die Mischung wird bei 90°C umgesetzt, bis der NCO-Gehalt auf ca. 3,3% abgesunken ist. Danach fügt man weitere 133 g MDI hinzu, kühlt auf ca. 50°C ab und setzt mit 325 g Butanoxim bei 80—100°C solange um, bis keine NCO-Gruppen mehr nachweisbar sind. Anschließend wird mit 360 g Äthylenglykolmonomethyläther verdünnt. Das blockierte NCO-Vorpolymerisat A hat eine Viskosität von ca. 50 000 mPas/20°C (cP/20°C) und einen maskierten NCO-Gehalt von ca. 3,8%.

B) Zu 643 g HDI gibt man unter Rühren 2000 g Polyol 1, 350 g Polyol 2 sowie 22,5 g Butandiol-(1,4). Die Mischung wird bei 110°C umgesetzt, bis ein NCO-Gehalt von 4,12% erreicht ist. Anschließend fügt man weitere 151 g HDI hinzu, kühlt auf ca. 70°C ab und setzt mit einer Mischung aus 1100 g Isononylphenol und 2 g Natriumphenolat bei 100—110°C solange um, bis keine NCO-Gruppen mehr nachzuweisen sind. Das blockierte NCO-Vorpolymerisat B hat eine Viskosität von ca. 30 000 mPas/20°C (cP/20°C) und einen maskierten NCO-Gehalt von ca. 4,3%.

C) Zu 744 g geschmolzenem MDI gibt man unter Rühren 2000 g Polyol 1, 275 g Polyol 2 sowie 22,5 g Butandiol-(1,4). Die Mischung wird bei 90°C umgesetzt, bis der NCO-Gehalt auf ca. 3,3% abgesunken ist. Danach fügt man weitere 194 g MDI hinzu, kühlt auf ca. 50°C ab und setzt mit 260 g Propanon-oxim bei 80—100°C solange um, bis keine NCO-Gruppen mehr nachzuweisen sind. Anschließend wird mit 390 g Methylglykolätheracetat verdünnt. Das blockierte NCO-Vorpolymerisat C hat eine Viskosität von ca. 50 000 mPas/20°C (cP/20°C) und einen blockierten NCO-Gehalt von ca. 4,25%.

D) 1600 g Polyol 3 und 200 g Polyol 2 werden 30 Min. bei 120°C im Wasserstrahlvakuum entwässert. Man kühlt auf ca. 40°C und gibt 200 g MDI und 140 g TDI/80 zu. Man läßt jetzt bei 60°C bis zu einem NCO-Gehalt von 2,9% reagieren (3—4 Stunden). Wenn dieser NCO-Gehalt erreicht ist, tropft man 129 g Butanoxim zu und hält das Gemisch bei 80°C, bis alle NCO-Gruppen abreagiert sind. Durch Zugabe von 22 g Methyläthylketon (MEK) und 22 g Isopropanol stellt man eine Viskosität von 60—65 000 mPas bei 25°C ein. Der Gehalt an verkappten NCO-Gruppen beträgt 2,7%.

Wie bei Präpolymer D) beschrieben, werden sind die folgenden blockierten NCO-Präpolymeren aus den angegebenen Rezepturen hergestellt:

E) 125,0 g Polyol 2
2000,IU g Polyol 3
187,5 g MDI
130,5 g TDI/80
144,0 g Butanonoxim
76,0 g Isopropanol
Viskosität: ca. 40 000 mPas/25°C
2,6% blockierte NCO-Gruppen

F) 2400 g Polyol 3
320 g MDI
107 g Butanonoxim
87 g Äthylenglykol-monomethyläther
Viskosität: 120 000 mPas/25°C
1,8% blockierte NCO-Gruppen

G) 600,0 g Polyol 3
100,0 g Polyol 5
130,0 g MDI
43,7 g Butanonoxim
Viskosität: 40 000 mPas/25°C
2,4% blockierte NCO-Gruppen

H) 1380 g Polyol 3
172,5 g MDI
160 g Benzophenonoxim
50 g Dimethylformamid
Viskosität: 58 000 mPas/25°C
2,0% blockierte NCO-Gruppen

I) 2500,0 g Polyol 4
275,0 g Polyol 2
877,0 g MDI
22,5 g Butandiol-1,4
325,0 g Butanonoxim
360,0 g Äthylenglykol-monoäthyläther
Viskosität: ca. 80 000 mPas/25°C
3,35% blockierte NCO-Gruppen

Beispiel 1

Die Deckstrichlösung D 1 ist eine 25%ige Lösung eines Polycarbonat-polyesterurethans in Dimethylformamid (DMF) mit einer Viskosität von 10 000 mPas (cP) bei 25°C, welche mit 8% einer handelsüblichen Pigmentpaste aus einem Eisenoxidpigment, Polyacrylat und Cyclohexanon pigmentiert ist. Das Polycarbonat-polyester-urethan wurde durch Schmelzkondensation von 1000 g (0,5 Mol) Hexandiolpolycarbonat, 1125 g (0,5 Mol) eines Butandiol-1,4-polyadipats, 270 g Butandiol-1,4 (3,0 Mol) und 1000 g (4,0 Mol) 4,4'-Diphenylmethan-diisocyanat hergestellt.

Auf einer Beschichtungsmaschine mit 2 Streichwerken wird zunächst mittels Walzenrakel die pigmentierte Deckstrichlösung D 1 auf ein Trennpapier aufgerakelt (Auftragsmenge 120 g/m²). Das bei der Passage durch den ersten Kanal verdampfte DMF wird einer Rückgewinnungsanlage zugeführt. Am zweiten Streichwerk wird die Haftstrichpaste H 1 (50 g/m²) in analoger Weise aufgerakelt, die Textilbahn, eine gerauhte Baumwollware von ca. 160 g/m², zukaschiert und im 2. Trockenkanal bei Eingangstemperaturen von 140°C und 160°C am Ausgang die Vernetzungsreaktion im Haftstrich herbeigeführt.

Die Haftstrichpaste H 1 besteht aus 1000 g des blockierten NCO-Präpolymeren D, 300 g einer 40%igen wäßrigen Dispersion eines Copolymerisats aus Acrylsäurebutylester, Styrol und N-Methylolacrylamid und 68,5 g 4,4'-Diamino-dimethyl-dicyclohexylmethan in Form des Isomerengemisches der allgemeinen Formel

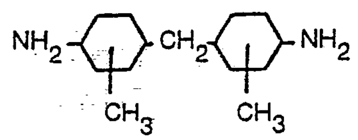

als Vernetzer ($NH_2$/NCO-Äquivalentverhältnis=0,90).

Die mit der erfindungsgemäßen Haftstrichpaste H 1 hergestellten Beschichtungsmuster weisen gute Knickechtheit, gute Haftung und weichen Griff auf, während mit einer Haftstrichpaste V 1, bestehend aus 1000 g blokkiertem NCO-Präpolymer D und 68,5 g 4,4'-Diaminodimethyldicyclohexylmethan, aber ohne Dispersionszusatz erzeugte Beschichtungsmuster im Vergleich dazu deutlich schwächere Knickechtheit, recht geringe Haftung und steifen Griff zeigen.

| Aufbau der Beschichtung tung | Knickbruch (Bally-Flexometer) 20°C (in Tausend) | −10°C | Haftung (N/2,5 cm) trocken | Lagerung in Äthylacetat (2 Min. bei 25°C) | Chemischreinigung in Perchloräthylen | Griff |
|---|---|---|---|---|---|---|
| D1/H1 | 200 | 50 | 30 | unverändert | unverändert | weich |
| D1/V1 | 100 | 20 | 10 | Abfall vom Substrat | stark beschädigt | steif |

Analoge Ergebnisse wie bei der Beschichtung aus D 1 und H 1 werden erhalten, wenn man in der Haftstichpaste anstelle von 4,4'-Diamino-dimethyl-dicyclohexylmethan 71,0 g des Diamins der obigen Formel I oder 68,5 g eines Diamins der Formel II mit einem Aminogruppengehalt von 13,5% oder 90,0 g eines Diamins der Formel III mit einem Aminogruppengehalt von 10,3% als Vernetzer einsetzt.

Beispiel 2

Die Deckstrichlösung D 2 ist eine 30%ige Lösung eines Polyesterurethans in DMF/MEK (1:1) mit einer Viskosität von 20 000 mPas/25°C (cP/25°C). Das Polyurethan ist aus 1800 g (2,0 Mol) eines Butandiol-1,4-polyadipats, 174 g TDI/80, 186 g Äthylenglykol (3,0 Mol) und 1000 g MDI aufgebaut.

Nach dem Pigmentieren wird, wie in Beispiel 1 beschrieben, auf einem Trennpapier ein Deckstrich von 30 g/m² Flächengewicht erzeugt. Nach dem Aufrakeln der Haftstrichpaste H 2 wird analog zu Beispiel 1 die textile Bahn zukaschiert.

Die Haftstrichpaste H 2 besteht aus 1000 g des blokkierten NCO-Präpolymeren E, 300 g einer 40%igen Polyurethan-Dispersion, aufgebaut aus Hexandiol/Adipinsäure-Polyester mit einer OH-Zahl von 130, Butandiol-1,4, Äthylendiaminoäthansulfonat und 1,6-Hexandiisocyanat sowie 66,0 g eines Diamins der Formel II (13,5% Aminogruppen) als Vernetzer. Anstelle dieses Amins können mit dem gleichen Ergebnis auch 66,0 g 4,4'-Diamino-dimethyl-dicyclohexylmethan oder 46,5 g Diaminodiäthyl-toluylen-diamin (18,0% Aminogruppen) als Vernetzer eingesetzt werden ($NH_2$/NCO=0,90).

Vergleichsmuster mit einer Haftstrichpaste V 2, bestehend aus Haftstrichpaste H 2 ohne Dispersionszusatz, weisen wesentlich geringere Knickechtheit, geringere Haftung, unzureichende Chemischreinigungsbeständigkeit und härteren Griff auf als Beschichtungen aus H 2 und D 2.

Beispiel 3

Die Deckstrichpaste D3 ist eine mit 2% Polyvinylpyrrolidon verdickte, mit 15% Titandioxid pigmentierte 40%ige PUR-Dispersion. Zur Herstellung der Dispersion werden 1700 g (1,0 Mol) eines Mischpolyesters aus Hexandiol-1,6, Neopentylglykol und Adipinsäure mit 303 g (1,8 Mol) Hexan-1,6-diisocyanat zu einem NCO-Präpolymeren umgestezt; dieses wird in wäßriger Dispersion mit 152 g (0,8 Mol) Äthylendiamino-äthansulfonsaurem Natrium als Kettenverlängerer zum Polyesterurethanharnstoff kettenverlängert.

Die Haftstrichpaste H 3 besteht aus 1000 g des blokkierten NCO-Präpolymeren E, 200 g einer 50%igen wäßrigen Dispersion eines Copolymeren aus Acrylsäurebutylester, Acrylnitril, Acrylamid und Acrylsäure und 59,0 g 4,4'-Diamino-dimethyldicyclohexylmethan, entsprechend einem $NH_2$/NCO-Äquivalentverhältnis von 0,80.

Aus D 3 und H 3 werden analog zu Beispiel 1 Textilbeschichtungen hergestellt. Im Vergleich zu diesen erfindungsgemäßen Beschichtungen weisen Vergleichsmuster mit einer Haftstrichpaste V 3, bestehend aus Haftstrichpaste H 3 ohne Dispersionzusatz, wesentlich geringere Knickechtheit, geringere Haftung, unzureichende Chemischreinigungsbeständigkeit und steiferen Griff auf.

Beispiel 4

Beispiel 1 wird mit Deckstrichpaste D 4 und Haftstrichpaste H 4 wiederholt.

Die Deckstrichpaste D 4 ist eine mit 8% einer Farbpaste aus organischem Pigment, Polyacrylat und Cyclohexanon pigmentierte 30%ige Lösung eines aliphatischen 1-Komponenten-Polyesterurethans in Toluol/Isopropanol/Äthylenglycoläthylätheracetat (29:29:12) mit einer Viskosität von 22 000 mPas/25°C (cP/25°C). Das Polyurethanwird durch Umsetzung eines NCO-Präpolymeren aus 1700 g (1,0 Mol) des in Beispiel 3 beschriebenen Polyesters und 490 g (2,2 Mol) IPDI mit 205 g (1,2 Mol) 1-Amino-3-aminomethyl-3,5,5-trimethyl-cyclohexen (IPDA) in Lösung hergestellt.

Die Haftstrichpaste H 4 besteht aus 1000 g des blokkierten NCO-Präpolymeren F, 250 g derselben 40%igen Acrylatdispersion wie in Haftstrichpaste H 1 und 45,6 g 4,4'-Diaminodimethyldicyclohexylmethan ($NH_2$/NCO-Äquivalentverhältnis=0,90) als Vernetzer.

Beispiel 5

Beispiel 1 wird mit Deckstrichpaste D 5 und Haftstrichpaste H 5 wiederholt.

Die Deckstrichpaste D 5 besteht aus 1000 g des blockkierten NCO-Präpolymeren A, 30 g der 40%igen Acrylatdispersion aus Haftstrich H 1 und 96,0 g 4,4'-Diaminodimethyl-dicyclohexylmethan (NCO/$NH_2$=0,90) als Vernetzer. Mittels einer Zylinder-Siebdruckanlage wird die Paste zu einem Deckstrich von 50 g/m² Auflage verarbeitet; Der Deckstrich wird in einem Heizkanal (Temperatur am Eingang 140°C, am Kanalausgang 160—170°C) vernetzt.

Als Haftsrichpaste H 5 wird ein Gemisch aus 1000 g des blockierten NCO-Präpolymeren E, 300 g derselben 40%igen Acrylatdispersion wie im Haftstrich H 1 und 66,0 g 4,4'-Diaminodimethyldicyclohexylmethan (NCO/$NH_2$=0,90) als Vernetzer aufgerakelt. Das Kaschieren des Textils erfolg wie in Beispiel 1, die Vernetzung des Haftstrichs bei 140—170°C.

Beispiel 6

Zur Direktbeschichtung eines 200—220 g/m² schweren Polyestergewebes dient als Vorstrich 60 g/m² eines Gemisches aus:

1000 g des blockierten NCO-Präpolymeren C, 200 g derselben 40%igen PUR-Dispersion wie im Haftstrich H 2 und 104,0 g 4,4'-Diamino-dimethyl-dicyclohexylmethan (DDDM) als Vernetzer. Der Vorstrich wird bei 170—180°C vernetzt. Als Deckstrich wird ebenfalls ein Gemisch aus 1000 g des blockierten NCO-Präpolymeren C, 100 g derselben 40%igen PUR-Dispersion wie im Haftstrich H 2 und 104 g DDDM als Vernetzer verwendet.

Auflage: 90 g/m²; Vernetzung bei 170—180°C Als Schlußstrich dient ein Gemisch aus 1000 g des blockkierten NCO-Präpolymeren C und 104 g DDDM als Vernetzer. Auflage: 50 g/m², Vernetzung bei 170—180°C.

Beispiel 7

Beispiel 1 wird unter Verwendung der Deckstrichpaste aus Beispiel 2 wiederholt. Als Haftstrichpaste H 8 dient ein Gemisch aus 1000 g des blockierten NCO-Präpolymeren E, 300 g einer 15%igen ammoniakalisch aufgeschlossenen Caseinlösung in Wasser und 66,0 g DDDM (NCO/$NH_2$=0,90) als Vernetzer.

Beispiele 8—21

Beispiel 1 wird unter Verwendung der Deckstrichlösung D 2 wiederholt. Die Haftstrichpaste enthält jeweils 1000 g des in der folgenden Tabelle angegebenen Präpolymeren, die angegebene Menge an wäßriger Polymeridispersion und 4,4'-Diamino-dimethyl-dicyclohexylmethan als Vernetzer. Es werden die folgenden Dispersionen eingesetzt:

a) Copolymerisat aus Methacrylsäurebutylester, Methacrylsäureäthylester, Acrylamid und N-Methylolacrylamid

b) Copolymerisat aus Acrylsäurebutylester, Styrol, Acrylsäure und Methacrylsäure

c) Copolymerisat aus Acrylsäurebutylester und Vinylacetat

d) Copolymerisat aus Butadien, Acrylnitril und N-Methylolacrylamid

e) Copolymerisat aus Acrylsäureäthylester und N-Methylolacrylamid

f) Nichtionische Polyurethandispersion, enthaltend ein Polyätylenpropylenoxid als Emulgator, aufgebaut aus einem Hexandiol/Neopentylglykol-Polyadipat (Molekulargewicht 1700), HDI, IPDI und Hydrazin

g) Anionische Polyurethandispersion aus Hexandiol/Neopentylglykol-Polyadipat (Molekulargewicht 1700), HDI und dem Na-Salz von Äthylendiaminoäthansulfonat.

h) Copolymerisat aus Acrylsäurebutylester, Acrylnitril, Acrylamid und N-Methylolacrylamid.

j) Anionische Polyurethandispersion, aufgebaut aus einem Diäthylenglykol-Polyadipat (OH-Zahl: 45), Polypropyleneglykol (OH-Zahl: 112), MDI und dem Na-Salz von Äthylendiaminoäthansulfonat.

TABELLE

Zusammensetzung der Haftstrichpaste

| Beispiel | blockiertes Präpolymer | Dispersion Menge (g) | Dispersion Konz. (%) | Art | Vernetzer (g) | Äquivalentverhältnis $NH_2/NCO$ |
|---|---|---|---|---|---|---|
| 8 | E | 300 | 40 | a | 66,0 | 0,90 |
| 9 | E | 300 | 48 | b | 66,0 | 0,90 |
| 10 | E | 200 | 50 | c | 66,0 | 0,90 |
| 11 | E | 400 | 40 | d | 66,0 | 0,90 |
| 12 | E | 300 | 50 | e | 66,0 | 0,90 |
| 13 | F | 300 | 50 | e | 45,0 | 0,90 |
| 14 | G | 400 | 50 | e | 61,0 | 0,90 |
| 15 | H | 500 | 50 | e | 51,0 | 0,90 |
| 16 | I | 300 | 50 | e | 75,5 | 0,80 |
| 17 | B | 500 | 50 | e | 109,0 | 0,90 |
| 18 | E | 300 | 50 | f | 66,0 | 0,90 |
| 19 | E | 300 | 40 | g | 66,0 | 0,90 |
| 20 | E | 300 | 50 | h | 66,0 | 0,90 |
| 21 | E | 300 | 40 | j | 66,0 | 0,80 |

**Patentansprüche**

1. Hitzehärtbare Zweikomponenten-Beschichtungsmassen für textile Materialien und Leder auf Basis von

a) gegebenenfalls verzweigten Vorpolymeren mit 2 bis 8 endständigen, blockierten Isocyanatgruppen und einem mittleren Molekulargewicht zwischen 500 und 25 000, hergestellt aus einer höhermole-

kularen Polyhydroxylverbindung und einem Überschuß eines Polyisocyanats unter anschließender Blockierung der freien NCO-Gruppen, wobei die Vorpolymeren 1 bis 8 Gew.-% an NCO-Gruppen in blockierter Form enthalten;

b) aliphatischen und/oder cycloaliphatischen und/oder aromatischen Aminen mit mindestens 2 primären und/oder sekundären Aminogruppen im Äquivalentverhältnis zwischen Aminogruppen und blockierten NCO-Gruppen von 0,7:1 bis 1,1:1,

sowie gegebenenfalls an sich bekannten Zuschlagstoffen, dadurch gekennzeichnet, daß sie

c) 3 bis 50 Gew.-% einer stabilen wäßrigen Polymerdispersion und/oder wäßrigen Polymerlösung mit einem Feststoffgehalt von 20 bis 70 Gew.-% sowie

d) maximal 10 Gew.-% eines organischen Lösungsmittels

enthalten.

2. Beschichtungsmassen nach Anspruch 1, dadurch gekennzeichnet, daß Komponente a) ein Vorpolymeres auf Basis eines Polyether- oder Polyesterpolyols mit einem Molekulargewicht zwischen 1000 und 4000 ist, welches 2 bis 4 endständige Isocyanatgruppen aufweist, die durch ein Ketoxim, einen Acetessigsäurealkylester oder einen Malonsäuredialkylester blockiert sind.

3. Beschichtungsmassen nach Ansprüchen 1 und 2, dadurch gekennzeichnet, daß Komponente b) ein Isomerengemisch der Formel

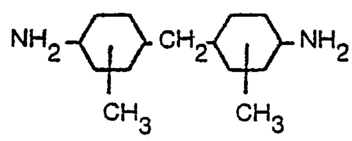

ist.

4. Beschichtungsmassen nach Ansprüchen 1 bis 3, dadurch gekennzeichnet, daß Komponente b) ein Polyamin der Formeln

I 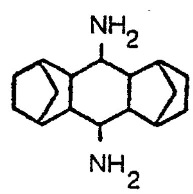

II 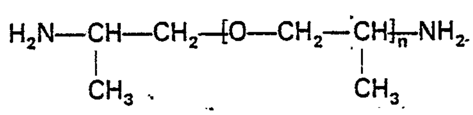 n=2—10

III 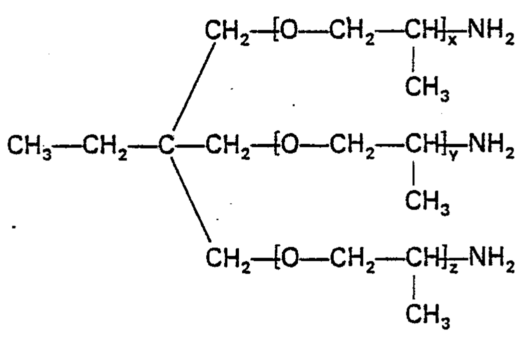 3≤x+y+z≤9

ist.

5. Beschichtungsmassen nach Ansprüchen 1 bis 4, dadurch gekennzeichnet, daß Komponente c) ein wäßriger Polymerisat-Latex auf Basis von Vinyl- und gegebenenfalls Dienmonomeren ist.

6. Beschichtungsmassen nach Ansprüchen 1 bis 4, dadurch gekennzeichnet, daß Komponente c) eine wäßrige Lösung von Polyacrylamid, Polyvinylalkohol, Polyvinylpyrrolidon oder Polyacrylsäure ist.

7. Beschichtungsmassen nach Ansprüchen 1 bis 4, dadurch gekennzeichnet, daß Komponente c) eine wäßrige Dispersion eines kationischen, anionischen oder nicht-ionischen Polyurethans ist.

8. Verfahren zur Beschichtung von textilen Materialien und Leder, indem man auf das Substrat eine Beschichtungsmasse auf Basis eines Polyurethan-Reaktivsystems nach dem Direkt- oder

Umkehrverfahren aufbringt und unter Formgebung verfestigt, dadurch gekennzeichnet, daß als Beschichtungsmasse die Kompositionen gemäß Ansprüchen 1 bis 7 eingesetzt und durch Erhitzen des beschichteten Substrats auf ca. 120 bis 190°C ausgehärtet werden.

**Revendications**

1. Masses à enduire à deux composants, pour matériaux textiles et le cuir, qui sont durcissables parla chaleur et qui sont à base

a) de prépolymères éventuellement ramifiés ayant 2 à 8 groupes isocyanate bloqués terminaux et en poids moléculaire moyen entre 500 et 25 000, préparés à partir d'un composé polyhydroxylé à poids moléculaire élevé et d'un excès d'un polyisocyanate avec blocage consécutif des groupes NCO libres, les prépolymères contenant 1 à 8% en poids de groupes NCO sous la forme bloquée,

b) d'amines aliphatiques et/ou cycloaliphatiques et/ou aromatiques ayant au moins 2 groupes amino primaires et/ou secondaires dans le raport d'équivalence entre groupes amino et groupes NCO bloqués de 0,7:1 à 1,1:1,

de même qu'éventuellement d'additifs connus en eux-mêmes, caractérisées ence qu'elles contiennent

c) 3 à 50% en poids d'une dispersion aqueuse stable de polymère et/ou d'une solution aqueuse de polymère ayant une teneur en matière sèche de 20 à 70% en poids, de même que

d) un maximum de 10% en poids d'un solvant organique.

2. Masses à enduire selon la revendication 1, caractérisées en ce que le composant a) est un prépolymère à base d'un polyéther- ou polyester-polyol ayant un poids moléculaire entre 1000 et 4000, qui présente 2 à 4 groupes isocyanate terminaux qui sont bloqués par une cétoxime, un ester alcoylé d'acide acétoacétique ou un ester dialcoylé d'acide malonique.

3. Masses à enduire selon les revendications 1 et 2, caractérisées en ce que le composant b) est un mélange isomère de formule:

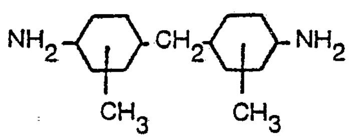

4. Masses à enduire selon les revendications 1 à 3, caractérisées en ce que le composant b) est une polyamine de formules:

I

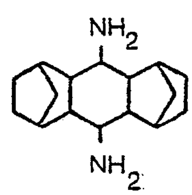

II

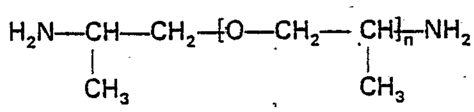

n=2—10

III

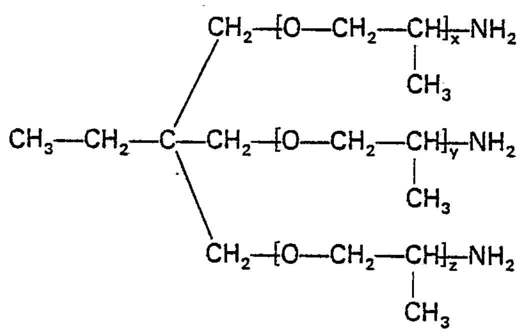

3≤x+y+z≤9

5. Masses à enduire selon les revendications 1 à 4, caractérisées en ce que le composant c) est un latex de polymère aqueux à base de monomères vinyliques et éventuellement diéniques.

6. Masses à enduire selon les revendications 1 à 4, caractérisées en ce que le composant c) est une solution aqueuse de polyacrylamide, d'alcool polyvinylique, de polyvinylpyrrolidone ou d'acide polyacrylique.

7. Masses à enduire selon les revendications 1 à 4, caractérisées en ce que le composant c) est und dispersion aqueuse d'un polyuréthane cationique, anionique ou non ionique.

8. Procédé d'enduction de matériaux textiles et du cuir, dans lequel on applique sur le substrat une masse à enduire à base d'un système réactif de polyuréthane par le procédé direct ou inversé et on la consolide tout en lui donnant une forme, caractérisé en ce qu'on utilise comme masse à enduire les compositions selon les revendications 1 à 7 et en ce qu'on les durcit à fond par chauffage du substrat enduit à environ 120 à 190°C.

**Claims**

1. Thermosetting two-component coating compositions for textile materials and leather, based on

a) optionally branched prepolymers containing 2 to 8 terminal masked isocyanate groups and having an average molecular weight between 500 and 25,000, produced from a relatively high molecular weight polyhydroxyl compound and an excess of a polyisocyanate, followed by masking of the free NCO-groups, the prepolymers containing 1 to 8% by weight of NCO-groups in masked form,

b) aliphatic and/or cycloaliphatic and/or aromatic amines containing at least 2 primary and/or secondary amino groups in an equivalent ratio between amino groups and masked NCO-groups of 0.7:1 to 1.1:1,

as well as, if appropriate, additives known per se, characterised in that they contain

c) 3 to 50% by weight of a stable aqueous polymer dispersion and/or aqueous polymer solution having a solids content of 20 to 70% by weight and

d) at most 10% by weight of an organic solvent.

2. Coating compositions according to Claim 1, characterised in that component a) is a prepolymer based on a polyether or polyester polyol having a molecular weight between 1,000 and 4,000 which contains 2 to 4 terminal isocyanate groups masked by a ketoxime, an acetoacetic acid alkyl ester or a malonic acid dialkyl ester.

3. Coating compositions according to Claims 1 and 2, characterised in that component b) is an isomer mixture of the formula

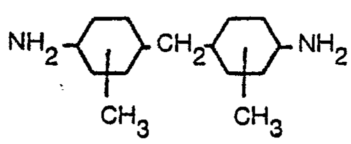

4. Coating compositions according to Claims 1 to 3, characterised in that component b) is a polyamine of the formulae

I

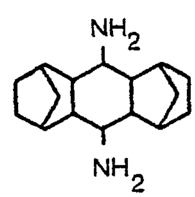

II

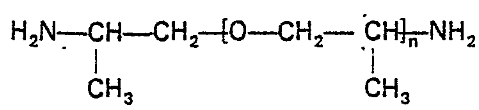

n=2—10

III

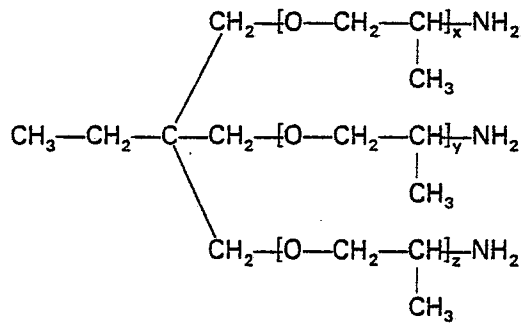

$3 \leq x+y+z \leq 9$

5. Coating compositions according to Claims 1 to 4, characterised in that component c) is an aqueous polymer latex based on vinyl monomers and, optionally diene monomers.

6. Coating compositions according to Claims 1 to 4, characterised in that component c) is an aqueous solution of polyacrylamide, polyvinyl alcohol, polyvinyl pyrrolidone or polyacrylic acid.

7. Coating compositions according to Claims 1 to 4, characterised in that component c) is an aqueous dispersion of a cationic, anionic or non-ionic polyurethane.

8. Process for coating textile materials and leather by applying a coating composition based on a polyurethane reactive system to the substrate by the direct or reverse coating process and hardening the coating thus applied with shaping or forming, characterised in that the compositions according to Claims 1 to 7 are used for coating and are hardened by heating the coated substrate to a temperature of about 120 to 190°C.